# EUROPEAN PATENT SPECIFICATION

(11) **EP 1 511 389 B1**
(45) Date of publication and mention of the grant of the patent: **20.09.2006**
(21) Application number: 03730472.2
(22) Date of filing: 22.05.2003
(51) Int. Cl.: A22C 25/20, B02C 18/18, B26D 1/29, B02C 18/06, A23L 1/326

(54) **A METHOD AND AN APPARATUS FOR PROCESSING BLOCKFROSEN RAW MATERIALS INTO CERTAIN KIND OF "SNOW"**
VERFAHREN UND VORRICHTUNG ZUM ZERKLEINERN IN FLOCKEN VON BLOCKGEFRORENEN GÜTERN
PROCEDE ET APPAREIL POUR TRANSFORMER DES MATIERES PREMIERES GELEES SOUS FORME DE BLOCS EN UN TYPE DE NEIGE

(30) Priority: 24.05.2002 IS 639602
(43) Date of publication of application: 09.03.2005
(73) Proprietor: Jonsson, Sveinbjoern, 112 Reykjavik (IS); Asgeirsson, Karl Johann, 112 Reykjavik (IS); Stefansson, Arnor, 110 Reykjavik (IS); Karlsson, Eyjolfur, 210 Gardabaer (IS)
(72) Inventor: JONSSON, Sveinbjoern, IS-112 Reykjavik (IS); ASGEIRSSON, Karl, Johann, IS-112 Reykjavik (IS)
(74) Representative: Jensen, Peter Kim
(86) International application number: PCT/IS2003/000020
(87) International publication number: WO 2003/099027

(56) References cited:
- EP-A- 0 450 692
- DE-A- 3 827 767
- DE-A- 19 507 872
- GB-A- 712 521
- US-A- 1 429 896
- US-A- 1 739 342

## Description

### TECHNICAL FIELD

The invention relates to a method, an apparatus and a product making it possible to work with block-frozen raw materials in a smaller format in various ways in the fields of the bait and the fodder industries at common storage freezing temperatures, and without previously thawing the materials.

### BACKGROUND ART

Freezing is a well-known storage method and is extensively used to protect various raw materials for bait, fodder, food and other such, as it greatly slows down the decomposition process of the natural tissues in the natural cycle. It is common for frozen products to be block-frozen for storage as a whole unit or processed in various ways before freezing. It is also common to thaw a frozen product, reprocess it and even to refreeze it again, however, freezing twice is not considered as improving quality of materials. It is even known for frozen products being shaped without thawing, for instance, sawn, sliced, and covered in some kind of sauces, breadcrumbs, and sold like that.
None of the these known methods though provide extensive freedom for scraping the raw materials into very small formats or particles where the size and form of the particles can be easily controlled without previously thawing the raw materials to a certain extent or even completely. Upon thawing and mixing the activity of various enzymes becomes manifold, presumably because of the mixing of oxygen and diverse adhesion. There are many indications that such activity frequently ruins the characteristics of a product over a short period of time.

It has been found for example during experiments with bait made of thawed, minced raw materials of various types that problems arose in the execution of the planned mincing/packaging method because of much instability in the quality of the bait. There are several indications that this originates in the combination of oxygen and an untimely activity of some enzymes.

In the field of food industry, for instance, there is known from a published European Patent Application no. EP 0 450 692 A2 (Unilever NV; Unilever PLC) a cutting process of comminuting hard-frozen anisotropic foodstuffs, particularly blocks of hard-frozen raw or cooked meat, without tempering or pre-breaking, a socalled "veneer-peeling" process, in which the hard-frozen foodstuff at a core temperature of -40 °C to -5 °C is for example cut in the manner of a lathe or like a pencil-sharpener, where the strong connective tissue of the foodstuff, particularly within the meat, is weakened or fragmented, but at the same time the essential fibrous character of the muscle fibres is preserved, resulting e.g. in less tough meat and thus lower quality meat can be upgrated. Other food materials processed in this way are ice cream, coconut, vegetables and hide material. The product obtained by this process is a kind of discontinuous, ribbon-like material, of which a wide array of morphologies can be prepared. For preserving of a good quality of the hard-frozen anisotropic foodstuff the process of veneer-peeling can be carried out in an cold inert gas atmosphere or in an otherwise cold environment.

Furthermore, an apparatus is known from the publiched DE patentdocument no. DE 19507872 A1 (Krüger, Günter), which discloses a disc cutter machine for comminuting block-formed, cutbar, frozen materiale or organic materiale compressed in blocks, where the cutter machine comprises a feeding means for the blocks to be cut, provided with a cutting opening, a rotating cutting device having at least one cutter blade extending radially from the axle of the cutting device and a housing provided with an offcut spacing, where the axle of the cutting device is arranged as an prolongation of or parallel to the center axis of the feeding means, where the cutting device rotates past the cutting opening of the feeding means and where the cutter blade being at least so long, that its cutting edge covers the cutting opening.

Sill further an another apparatus is known from the publiched DE patentdocument no. DE 3827767 A1 (Magurit Gefrieschneider GMBH), which discloses a cutter drum for an apparatus for comminuting frozen materiale, comprising of a drum provided with at least one U-shaped cutter means, comprising of one flaker knive arranged in some distance from and parallel to the drum and two end-cutting knives arranged one at each end of the flaker knive and fastened to the drum, whereby the flaker knive together with the two end-cutting knives form an opening of a slot through the drum for the flakes to pass through, and where the cutter means further comprises a cross-cutting knive, which is radially mounted inside the opening, between the flaker knive and the drum.

In the view of these disclosures there is still a need for providing a method, an apparatus and a product making it possible to work with block-frozen raw materials in a smaller format in various ways in the fields of the bait and the fodder industries, where it is a condition that the method is executed at common storage freezing temperatures, and under a relatively slow cutting rate.

### DISCLOSURE OF INVENTION

The object of this invention is to present a method and an apparatus to process block-frozen raw materials in the fields of the bait and the fodder industries into a controllable, smaller format, a product, in a freezer cabin without previously thawing the materials, and thereby making it easier to continue processing them at a common storage freezing temperature, and being able to control factors like the size of the particles, the mixing proportions, the pressing, binding, and the shape in order for the product to serve diverse purposes to its best possible ability, either alone or mixed with other materials, without the risk of sudden decomposition occurring because of a reduced freezing stage of the product.

This object is achieved and the method is special in that, according to Claim no. 1, the raw material being shredded, scraped or planed down to rather small shreds or minces of various fine consistencies in a freezer cabin at a common storage freezing temperature in such a way, that the temperature of the frozen small shreds or minces does not increase during the execution of the method.

The object is also achieved by that the apparatus, according to Claim no. 2, for executing the method, is unique in that the hardened edges of the plane teeth having nicks, such that the edges are "teethed" with different locations of the nicks, such that two and two plane teeth being identical and located crosswise from each other on the disk.

The object is furthermore achieved by that the product, cf. Claim no. 3, is unique in that the small shreds or mince forming a certain kind of "raw-material snow" with differently sized small particles in a frozen condition, which is easy to handle and mix in various ways.

The advantages of the invention are mainly as follows:
- Frozen raw materials are manually and/or mechanically changed into some kind of snow at a common storage freezing temperature, thereby making it possible to control the various factors, for example, the size of the particles, the mixing, the pressing, the binding and the form with the purpose of the materials serving as well as possible their role, both alone or in a combination with other materials, as bait or fodder.
- The method is a certain kind of snow technique (snowing) that facilitates working with the said materials without sudden material decomposition occurring, which is quite common upon thawing and mincing. Hence, the snow technique is intended to maintain the frozen condition of the product and to prevent any untimely activation of enzymes so that they may, at the right point in time, carry out their role to release flavoring.
- The method for making fodder makes it possible to change frozen blocks of rawmaterial into snow and to mix into it various materials just before use for feeding in the appropriate quantities by mechanical means, similar to technical dry-feeding

### BRIEF DESCRIPTION OF DRAWINGS

The invention is further explained below with references to explanatory figures as applicable, where:
Figure 1 illustrates the apparatus from its side.
Figure 2 illustrates the turning disk from above.
Figure 3 illustrates the position and the shape of the plane teeth.

### MODES FOR CARRYING OUT THE INVENTION

### The Method

The method in its most simple format is entailed in raw materials of various types in frozen blocks being manually shredded with shredders of various types and roughness in a freezer cabin at a common storage freezing temperature; thus creating strips, shreds or flakes of various fine consistencies of frozen raw materials , i.e., a certain type of "raw-material snow". The size and thickness of the particles in the material-snow can be controlled, both through the type of shredders and how they are used.

The initial experiments that have been made with frozen blocks of sand eel and squid in a freezer cabin at a temperature of -25 °C with the objective of preparing artificial bait for cod, haddock and other species illustrated that the "raw-material snow" can be handled in a frozen condition for mixing, pressing, forming and packaging. Experiments were also made in using the artificial bait at sea. These experiments provided valuable indications to the effect that the necessary flavoring had been delivered as the catch quantity and the combination of the catch were very satisfactory.

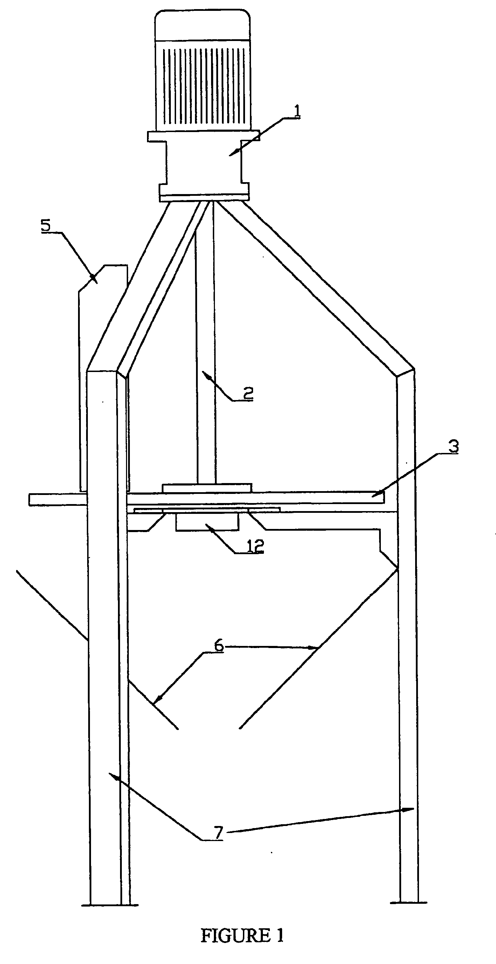

Considering, however, how this manual work is both time-consuming and difficult, machinery was invented and built, cf. Figures 1-3, intended for executing this method in a more efficient and prompt manner in comparable conditions. Instead of the shredder, there are four plane teeth (8) that are installed inclining in the turning disk (3), which planes the frozen raw-material blocks that are sitting in special vertical racks (5) and resting on a disk (3). The blocks are moved downwards by their own weight as soon as shreds are planed off them. For controlling the size of the shreds in the raw-material snow, the edges (10) of the plane teeth are uneven or "teethed", i.e., they have nicks (11) that are differently located such that each plane tooth planes the "ridges" formed by the nicks of the previous plane tooth in the raw-material block's surface. Thus, each plane tooth forms a few narrow "frozen strips", each of which then breaks into suitable shreds because of the inclined teeth when they pass through the slots (9) and also because of their height location. The thickness of the shreds is controlled by the height of the teeth (adjustable). The raw-material blocks are also evenly scraped this way, based on one working cycle of the disk.

### The Apparatus

Figure 1 illustrates the apparatus as seen from the side. At the top and the middle of the support structure (7) of the apparatus is the driving mechanism (1), which is a speed-controllable electric motor with an attached reduction gear. The support structure or the frame consists of three legs or pillars located at a 120° angle between them. There is an axle (2) leading vertically down from the middle of the driving mechanism. The lower end of the axle sits in a support bearing (12), which is attached to the horizontal arms of the support structure (7), right above the middle of the support pillars. A round and solid disk (3), which turns with the axle, is attached at a rectangular position to the axle. The axle leads through the middle of the disk down to the support bearing (12). Between, the legs of the support structure (7) and above the disk (3) are three vertical and adjustable racks (5) for the frozen raw-material blocks (only one rack shown in Figure 1). The accumulation funnel (6) underneath the disk (3) is attached to the support structure, accumulating the product for further handling and continued processing.

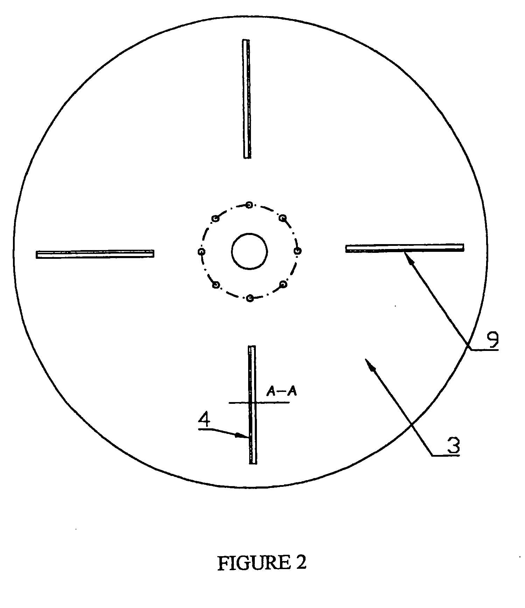

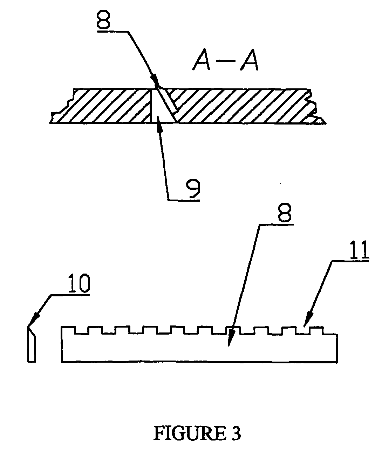

As illustrated in Figures 2 and 3, the disk (3) has four oblong slots (9) extending through the disk that are radially located from the center of the disk with 90° angle between them. One side of each slot, lengthwise, has an inclining seat (4) for the plane teeth (8). Each plane tooth has a hardened edge (10) that is teethed, i.e., they are made with nicks (11) such that the edges are "teethed". The nicks (11) are differently positioned such that two and two plane teeth (8) are identical, however, positioned in the disk (3) such that the teeth of each plane tooth planes the "ridges" made by the previous plane tooth in the surface of the raw-material block.

The length of the plane teeth must be sufficient in order to ensure that the entire surface of the frozen raw-material block is planed upon the turning motion of the disk (3). The length of the slots (9) is appropriately based on the plane teeth. The slots neither reach in nor out off the disk.

It is essential that the plane teeth (8) be made of good stainless, solid and hardened tool steel as the frozen block of various types of raw materials can be very tough and difficult to process at a high storage freezing temperature.

The processing and plane speed of the apparatus can be controlled by adjusting the speed of the electric motor, however, it is essential that the plane speed is not too high in order to prevent heat from forming when the material is planed; i.e., to prevent the frost in the raw-material snow from decreasing and to prevent any risk of thawing.

### The Product

As previously described, a product is formed upon the execution of the method set forth in this invention, in the form of rather small strips, shreds or flakes of various fine consistencies of frozen raw material, i.e., a certain kind of "raw-material snow", where the size of the particles and the thickness of the shreds or flakes in the material snow can be controlled. The material snow has various qualities in these conditions, for instance, there is hardly any adhesion to metal surfaces, which facilitates easy material handling in the machinery for mixing, pressing and forming.

The diverse user options of this method should also be mentioned, for example, in the field of fodder in fish farming as the method allows mechanical feeding that is not unlike the dry-feeding that now prevails.

This invention facilitates the launching of extensive experimenting, particularly in the areas covered by the method.

The invention here described is not limited to the aforementioned specification as it may be executed in various ways.

## Claims

1. A method to facilitate working with block-frozen raw material in smaller format and in various ways in the fields of bait and fodder industries, more particularly in the fields of bait, where the method consists of making the block-frozen raw material smaller by using manual shredders of various types or by using a special apparatus intended for the said use, and is **characterized by** the raw material being shredded, scraped or planed down to rather small shreds or flakes of various fine consistencies in a freezer cabin at a common storage freezing temperature in such a way, that the temperature of the frozen small shreds or flakes does not increase considerable during the execution of the method.

2. An apparatus making it possible to work with block-frozen raw material in smaller format and in various ways in the fields of bait and fodder industries, more particularly in the fields of bait, which is based on executing the method, according to Claim 1, where the apparatus comprises a driving mechanism (1) sitting on top and at the middle of the support structure (7); a rotating axle (2) leading approximately vertically down from the middle of the driving mechanism; a disk (3) attached perpendicular to the axle near its lower end, which leads through the center of the disk down to the support bearing (12) and the disk being round and solid with four elongated slots (9) extending through the disk and positioned radiant from the center of the disk at a 90° angle between the slots and the slots having slanting seats (4) for more than one, preferably four, plane teeth (8) with hardened edges (10); vertical, adjustable racks (5) for the raw-material blocks, which are made such that the blocks move steadily down to the "cutting position" because of their weight as they being planed; an accumulation funnel (6) located underneath the disk (3) for accumulating the raw-material mince for further handling and continued processing; **characterized by** the hardened edges (10) of the plane teeth (8) having nicks (11) such that the edges are "teethed" with different locations of the nicks (11) such that two and two plane teeth (3) being identical and located crosswise from each other on the disk (3).

3. A product to make it possible to work with block-frozen raw materials in smaller format in various ways in the fields of bait and fodder industries, more particularly in the fields of bait, based on the method and the apparatus, according to the preceding claims, and **characterized by** the small shreds or flakes forming a certain kind of "raw-material snow" with differently sized small particles or flakes in a frozen condition.

## Patentansprüche

1. Verfahren, das es ermöglicht, mit blockgefrorenen Rohmaterialien kleineren Formats auf verschiedene Weise im Bereich der Tierköder- und Futtermittelindustrie zu arbeiten, insbesondere im Bereich der Tierköderindustrie, wobei das Verfahren umfasst, blockgefrorene Rohmaterialien durch die Verwendung manueller Zerkleinerer unterschiedlicher Arten zu zerkleinern oder durch die Verwendung einer speziellen, dazu geeigneten Vorrichtung, **dadurch gekennzeichnet, dass** das Rohmaterial derart in einer Gefrierkammer bei normaler Gefrierlagertemperatur zu sehr kleinen Spanen oder Flocken verschiedener feiner Konsistenzen (fine consistencies) zerkleinert, geschabt oder abgehobelt wird, dass die Temperatur der gefrorenen kleinen Spane oder Flocken während der Ausführung des Verfahrens nicht erheblich ansteigt.

2. Vorrichtung, die es ermöglicht, mit blockgefrorenen Rohmaterialien kleineren Formats auf verschiedene Weise im Bereich der Tierköder- und Futtermittelindustrie zu arbeiten, insbesondere im Bereich der Tierköderindustrie, und die auf der Ausführung des Verfahrens nach Anspruch 1 basiert, wobei die Vorrichtung aufweist: eine Antriebseinheit (1), die der Oberseite und der Mitte der Tragstruktur (7) zugeordnet ist; eine rotierende Achse (2), die annähernd vertikal von der Mitte der Antriebseinheit nach unten verläuft; eine Scheibe (3), die senkrecht an der Achse im Bereich deren unteren Endes befestigt ist, wobei die Achse durch das Zentrum der Scheibe hindurch nach unten zu dem Traglager (12) verläuft, und wobei die Scheibe rund ist und massiv mit vier länglichen Schlitzen (9), die durch die Scheibe hindurchtreten und sich radial von dem Zentrum der Scheibe aus erstreckend auf dieser positioniert sind, mit einem 90° Winkel zwischen den Schlitzen, wobei die Schlitze schrägverlaufende Sitze (4) aufweisen für mehr als einen, vorzugsweise vier Flachzähne (8) mit gehärteten Kanten (10); vertikale, einstellbare Regale (5) für die Rohstoffblöcke, welche derart ausgebildet sind, dass die Blöcke beim Hobeln stetig durch ihr Gewicht in die "Schneidposition" absinken; ein Sammeltrichter (6), der unterhalb der Scheibe (3) angeordnet ist zum Sammeln des zerhakten Rohstoffes für die weitere Verarbeitung und Bearbeitung, **dadurch gekennzeichnet, dass** die gehärteten Kanten (10) der Flachzähne (8) Einkerbungen (11) aufweisen, derart, dass die Kanten mit unterschiedlicher Anordnung der Einkerbungen (11) so "gezahnt" sind, dass jeweils zwei Flachzähne (8) identisch sind und über Kreuz auf der Scheibe (3) angeordnet sind.

3. Produkt, das es ermöglicht, mit blockgefrorenen Rohmaterialien kleineren Formats auf verschiedene Weise im Bereich der Tierköder- und Futtermittelindustrie zu arbeiten, insbesondere im Bereich der Tierköderindustrie, basierend auf dem Verfahren und der Vorrichtung der vorhergehenden Ansprüche, **gekennzeichnet durch** kleine Spane oder Flocken, die eine bestimmte Art "Rohmaterialschnee" bilden mit unterschiedlich kleinen Teilchen oder Flocken in gefrorenem Zustand.

## Revendications

1. Procédé pour faciliter le travail avec une matière première congelée sous forme de blocs en un plus petit format et de différentes manières dans les domaines des appâts et de l'industrie du fourrage, plus particulièrement dans le domaine des appâts, le procédé consistant à réduire la taille de la matière première congelée sous forme de blocs au moyen de différents types de déchiqueteuses manuelles ou au moyen d'un appareil spécial destiné à cet usage, et est **caractérisé en ce que** la matière première est déchiquetée, fragmentée ou rabotée en plus petits fragments ou copeaux de différentes consistances fines dans un congélateur, à une température de congélation de stockage habituelle, d'une manière telle que la température des petits fragments ou copeaux congelés n'augmente pas de façon importante pendant l'exécution du procédé.

2. Appareil permettant de travailler avec une matière première congelée sous forme de blocs en un plus petit format et de différentes manières dans les domaines des appâts et de l'industrie du fourrage, plus particulièrement dans le domaine des appâts, qui se fonde sur l'exécution du procédé selon la revendication 1, l'appareil comprenant : un mécanisme d'entraînement (1) disposé au-dessus et au milieu de la structure de support (7) ; un axe de rotation (2) descendant approximativement verticalement depuis le milieu du mécanisme d'entraînement (1) ; un disque (3) fixé perpendiculairement à l'axe, à proximité de l'extrémité inférieure de celui-ci, qui descend au travers du centre du disque jusqu'au palier de support (12), le disque étant rond et plein, avec quatre longues fentes (9) formées à travers lui et positionnées en rayon par rapport au centre du disque, avec un angle de 90° entre les fentes, et les fentes ayant des sièges inclinés (4) pour plus d'une, de préférence quatre, dents de rabotage (8) ayant des arêtes durcies (10) ; des guides réglables et verticaux (5) pour les blocs de matière première, qui sont constitués de telle sorte que les blocs descendent d'une manière régulière jusqu'à la "position de coupe" sous l'effet de leur poids lorsqu'ils sont rabotés ; un entonnoir d'accumulation (6) situé en dessous du disque (3) servant à amasser la matière première hachée pour sa manipulation ultérieure et la suite de son traitement ; **caractérisé en ce que** les arêtes durcies (10) des dents de rabotage (8) ont des encoches (11), de telle sorte que les arêtes soient "dentées", avec les encoches (11) positionnées différemment, de telle sorte que les dents de rabotage (3) soient identiques deux à deux et soient disposées en une configuration croisée sur le disque (3).

3. Produit permettant de travailler avec une matière première congelée sous forme de blocs en un plus petit format et de différentes manières dans les domaines des appâts et de l'industrie du fourrage, plus particulièrement dans le domaine des appâts, se fondant sur le procédé et l'appareil selon les revendications précédentes, et **caractérisé en ce que** les petits fragments ou copeaux forment un certain type de "neige de matière première" ayant de petites particules ou de petits copeaux, de tailles différentes, dans un état congelé.
